## Europäisches Patentamt
## European Patent Office
## Office européen des brevets

(19)

(11) Veröffentlichungsnummer: **0 049 315**
**B1**

(12) # EUROPÄISCHE PATENTSCHRIFT

(45) Veröffentlichungstag der Patentschrift:
07.03.84

(21) Anmeldenummer: **81101684.9**

(22) Anmeldetag: **07.03.81**

(51) Int. Cl.³: **B 65 G 33/18,** B 65 G 33/26,
B 65 G 65/46

(54) **Vorrichtung zum Fördern, und insbesondere Dosieren, eines Schüttgutes.**

(30) Priorität: **08.10.80 CH 7505/80**

(43) Veröffentlichungstag der Anmeldung:
**14.04.82 Patentblatt 82/15**

(45) Bekanntmachung des Hinweises auf die Patenterteilung:
**07.03.84 Patentblatt 84/10**

(84) Benannte Vertragsstaaten:
**AT BE CH DE FR GB IT LI NL SE**

(56) Entgegenhaltungen:
**DE - A - 2 028 577**
**DE - A - 2 039 683**
**DE - A - 2 628 015**
**DE - A - 2 919 428**
**DE - B - 1 913 888**
**FR - A - 2 223 271**
**FR - A - 2 312 437**
**FR - A - 2 324 550**
**GB - A - 817 344**
**US - A - 2 869 715**
**US - A - 3 782 535**

(73) Patentinhaber: **K-TRON SODER AG, Mühlestrasse 96,**
**CH-5702 Niederlenz (CH)**

(72) Erfinder: **Lüscher, Walter, Föhrenweg 364,**
**CH-5706 Boniswil (CH)**

(74) Vertreter: **Eder, Carl E. et al, Patentanwaltsbüro Eder &**
**Cie Münchensteinerstrasse 2, CH-4052 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zum Fördern, und insbesondere Dosieren, eines Schüttgutes

Die Erfindung betrifft eine Vorrichtung gemäss dem Oberbegriff des Anspruches 1.

Aus der deutschen Offenlegungsschrift 29 19 428 ist eine Vorrichtung zum Fördern und Dosieren von teilchenförmigen Schüttgütern mit einem horizontal verlaufenden Förder-Kanal bekannt. Dessen in der Förderrichtung gesehen vorderer Anfangs-Abschnitt ist im Querschnitt in seiner oberen Hälfte offen, während sein in der Förderrichtung gesehen hinterer End-Abschnitt eine Auslassöffnung aufweist, im übrigen aber im Querschnitt allseitig geschlossen ist. Ein zum Einleiten des Schüttgutes in den Förder-Kanal dienender, trichterartiger Einlauf mündet in den oben offenen Anfangs-Abschnitt des Förderkanals. Im Förder-Kanal sind zwei um parallel nebeneinander drehbare Achsen drehbare Schnekken angeordnet, die einen Kern und eine mit diesem zusammenhängende, schraubenlinienförmig verlaufende Rippe aufweisen.

Wenn eine derartige Schnecken aufweisende Vorrichtung zum Dosieren verwendet wird, besteht bei gewissen Schüttgütern, wie beispielsweise Titanoxydpulver, die Gefahr, dass die Schüttgüter an den Schnecken und vor allem auch an der Innenfläche des Förder-Kanals festhaften. Dies kann unter Umständen die völlige Blockierung der Schnecken verursachen. Da ineinander eingreifende Schnecken in bezug auf die Profilform der Rippen und die Abmessungen sehr genau sein müssen, ist zudem die Herstellung der Schnecken relativ teuer.

Die deutsche Offenlegungsschrift 20 28 577 offenbart eine Förder-Vorrichtung für ein körniges oder pulverförmiges Gut, bei der über dem Boden eines trichterförmigen Einlaufs seitlich ein rohrförmiger Mantel befestigt ist, der zusammen mit dem Bodenbereich des Einlaufs einen Förder-Kanal bildet. Im Bodenbereich des Einlaufs sind zwei verschieden lange Schraubenfedern angeordnet, deren Längsachsen parallel nebeneinander verlaufen und die durch einen Zwischenraum vollständig voneinander getrennt sind. Die einen Enden der beiden Federn sind drehfest mit einer Antriebswelle verbunden. Das der Antriebswelle abgewandte Ende der längeren Feder ragt in den erwähnten, zum Förder-Kanal gehörenden, rohrförmigen Mantel hinein, während das der Antriebswelle abgewandte Ende der kürzeren Feder in einen nicht zum Förder-Kanal gehörenden Stutzen hineinragt. Die beiden Federn haben vorzugsweise den gleichen Wicklungssinn und werden in unterschiedlichen Drehrichtungen und mit verschiedenen Drehzahlen gedreht.

Da die beiden Federn durch einen Zwischenraum vollständig voneinander getrennt sind und da die kürzere Feder überhaupt nicht in den erwähnten, rohrförmigen Mantel hineinragt, besteht bei dieser bekannten Vorrichtung, insbesondere im Innern des besagten, rohrförmigen Mantels, eine grosse Gefahr, dass Schüttgut an der längeren Feder anhaftet und nicht einwandfrei gefördert und dosiert wird. Des weitern besteht bei den Federn die Gefahr, dass sie sich im Bereich des Einlaufs aufbäumen oder seitlich ausbiegen.

Der Erfindung liegt nun die Aufgabe zugrunde, eine Vorrichtung zu schaffen, durch die die Nachteile der vorbekannten Vorrichtungen vermieden werden können. Dabei soll die Vorrichtung insbesondere eine möglichst genaue und störungssichere Dosierung eines Schüttgutes ermöglichen.

Diese Aufgabe wird ausgehend von der aus der deutschen Offenlegungsschrift 20 28 577 bekannten Vorrichtung nach der Erfindung durch eine Vorrichtung gemäss dem Anspruch 1 gelöst.

Zweckmässige Ausgestaltungen gehen aus den anhängigen Ansprüchen hervor.

Der Erfindungsgegenstand wird nun anhand eines in der Zeichnung dargestellten Ausführungsbeispiels und einer Variante davon erläutert.

In der Zeichnung zeigen

die Figur 1 eine axonometrische Ansicht einer Vorrichtung zum Fördern und Dosieren eines Schüttgutes,

die Figur 2 eine teils im Schnitt und teils in Ansicht gezeichnete Darstellung der Vorrichtung,

die Figur 3 eine Draufsicht auf die Stirnseite des Einlaufs und des Förder-Kanals in grösserem Massstab,

die Figur 4 eine Ansicht von Teilen eines Dorns und einer Schraubenfeder in noch grösserem Massstab, und

die Figur 5 einen Teil eines Dorns und einer Variante einer Schraubenfeder.

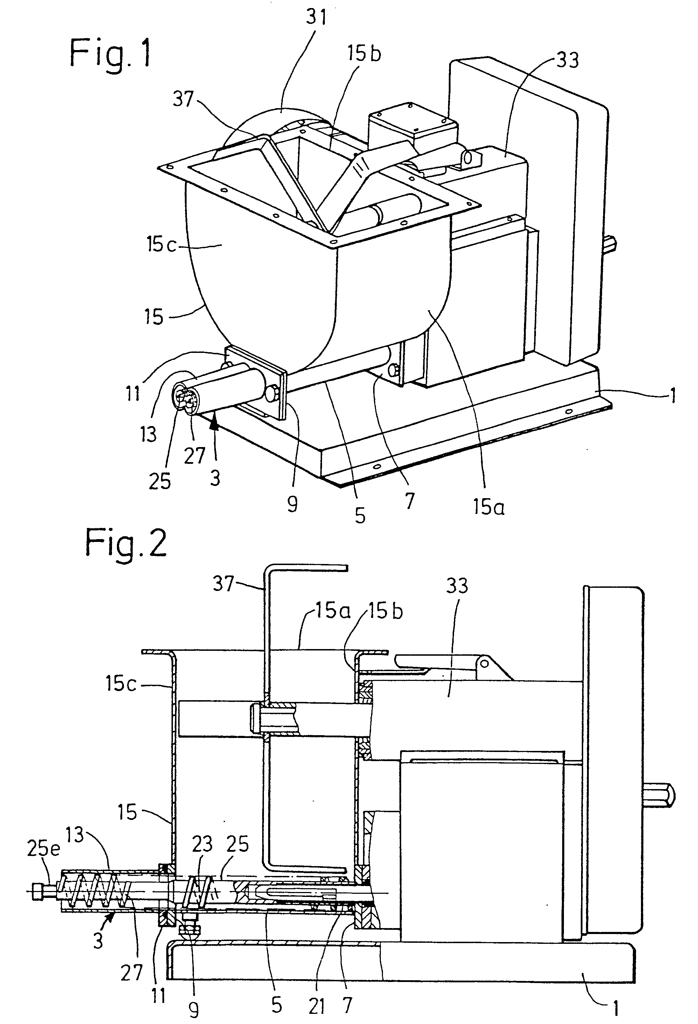

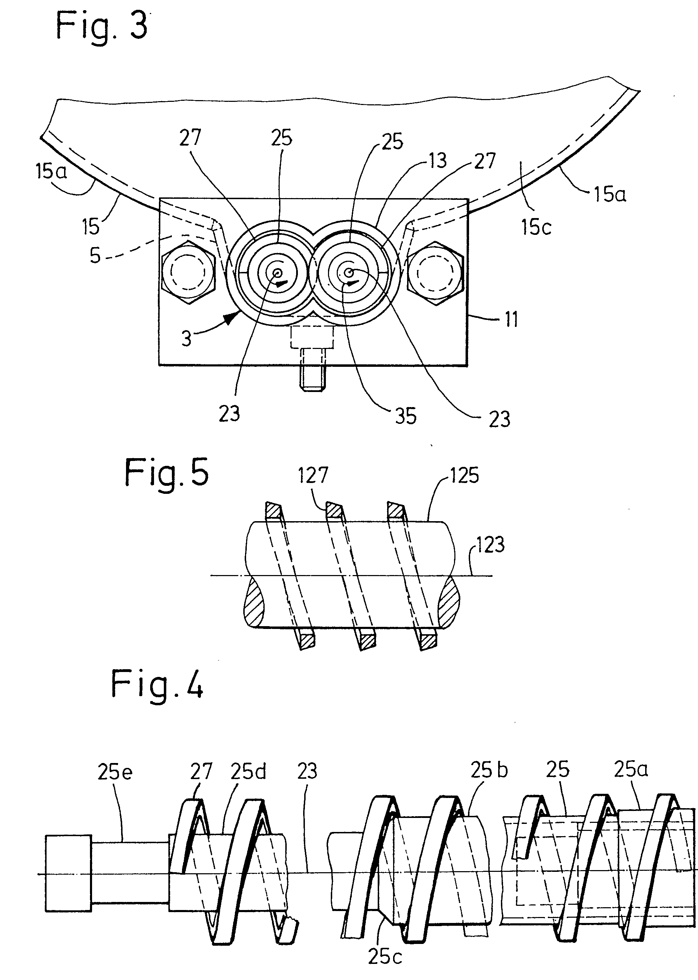

Die in den Figuren 1 und 2 dargestellte Vorrichtung dient zum Fördern eines teilchenförmigen Schüttgutes, nämlich eines griess- oder pulverförmigen Schüttgutes, dessen Korngrössen beispielsweise unterhalb etwa 1 bis 2 mm liegen. Die Vorrichtung weist einen Support 1 auf. An diesem ist ein als Ganzes mit 3 bezeichneter, horizontal oder mindestens annähernd horizontal verlaufender Förder-Kanal befestigt. Eine oben offene Rinne bildet in der Förderrichtung gesehen den Anfangs-Abschnitt 5 des Förder-Kanals 3 und ist bei ihren Enden an zwei Flanschen 7 und 9 befestigt, etwa angeschweisst. Wie es besonders deutlich aus der Figur 3 ersichtlich ist, ist der Boden der den Anfangs-Abschnitt 5 bildenden Rinne im Querschnitt in der Mitte eben, könnte aber auch durch zwei ungefähr die Form einer liegenden Drei ergebende Kreisbogen gebildet sein. Der Boden der Rinne geht im Querschnitt über einen kreisbogenförmigen Übergang stetig in die beiden Wände der Rinne über. Diese sind nach oben voneinander weg geneigt, so dass sich die Rinne im Querschnitt nach oben stetig erweitert. Am Flansch 9 ist ein anderer Flansch 11 dicht angeschraubt. Ein beidenends offenes Rohr bildet in der Förderrichtung gesehen den End-Abschnitt 13 des Förder-Kanals 3 und hat im Querschnitt die Form einer liegenden Acht. Der End-Abschnitt 13 des Förder-Kanals 3 ist also im Querschnitt allseits geschlossen und sein dem Anfangs-Abschnitt 5 abgewandtes Ende bildet die Auslass-Öffnung des Förder-Kanals 3.

Über dem Anfangs-Abschnitt 5 des Förder-Kanals 3 ist ein zum Speichern und Einleiten des Schüttgutes in diesen dienender Einlauf 15 angeordnet. Dieser weist zwei parallel zur Längsrichtung des Förder-Kanals verlaufende Seitenwände 15a sowie zwei rechtwinklig dazu verlaufende Stirnwände 15b bzw. 15c auf. Der Einlauf 15 ist oben offen und mit einem flanschartigen Kragen versehen, auf den ein Aufbau oder eine Zuleitung aufgeschraubt werden kann. Die Seitenwände 15a laufen vom Kragen weg zunächst vertikal nach unten und nähern sich dann kreisbogenförmig aneinander an. Die unteren Ränder der Seitenwände 15a sind dicht mit den Längsrändern des Anfangs-Abschnittes 5 des Förder-Kanals 3 verbunden, nämlich verschweisst. Die beiden Stirnwände 15b und 15c bilden vertikale Ebenen und sind bei ihren unteren Rändern dicht mit den Flanschen 7 bzw. 9 verbunden. Der Anfangs-Abschnitt 5 des Förder-Kanals 3 und der Einlauf 15 bilden also zusammen einen Kasten. Wenn man den Einlauf 15 für sich allein betrachtet, bildet er gewissermassen einen Trichter, der unten bei seiner engsten Stelle in den oben offenen Anfangs-Abschnitt 5 mündet.

Im Support 1 sind zwei Wellen 21 um zueinander parallele, in der Längsrichtung des Förder-Kanals 3 verlaufende Drehachsen 23 drehbar gelagert. Die Wellen 21 durchdringen im Flansch 7 vorhandene Öffnungen und sind dort abgedichtet. Auf den in den Anfangs-Abschnitt 5 des Förder-Kanals 3 hineinragenden Teilen der beiden Wellen ist je ein starrer, d.h. formsteifer, eine im wesentlichen bezüglich der zugehörigen Drehachse 23 rotationssymmetrische Aussenfläche aufweisender Dorn 25 lösbar aufgesteckt und durch bajonettverschlussartige Mitnehmer- und Haltemittel drehfest und axial unverschiebbar befestigt. Wie es besonders deutlich aus der Figur 4 ersichtlich ist, weist jeder Dorn 25 an seinem sich in den Figuren 2 und 4 rechts, d.h. beim Flansch 7 befindenden Ende einen kurzen zylindrischen End-Abschnitt 25a auf. An diesen schliesst ein längerer und etwas dünnerer zylindrischer Abschnitt 25b an. Dieser hängt auf seinem dem End-Abschnitt 25a abgewandten Ende über einen kurzen konischen Übergang 25c mit einem noch dünneren, zylindrischen Abschnitt 25d zusammen, der ein wenig aus dem in der Förderrichtung gesehen hinteren Ende des End-Abschnittes 13 des Förder-Kanals 3 herausragt. Das aus dem Förder-Kanal 3 herausragende Ende des Dorns 25 ist zweckmässigerweise mit einem sich ausserhalb des Förder-Kanals 3 befindenden, kurzen, mindestens teilweise durch ebene Flächen begrenzten, beispielsweise vierkantförmigen Abschnitt 25e versehen.

Auf jedem Dorn 25 ist eine Schraubenfeder 27 angeordnet, deren Längsachse im allgemeinen, d.h. bei undeformierter Schraubenfeder, mit der Drehachse 23 des betreffenden Dorns zusammenfällt. Die Windungen der beiden Schraubenfedern verlaufen im gleichen Drehsinn und sind beispielsweise linksgängig. Der die Schraubenfeder bildende, elastisch deformierbare Draht hat eine über seine ganze Länge konstante, beliebige, beispielsweise quadratische Profilform und ist derart gewickelt, dass eine seiner Quadratseiten der zugehörigen Drehachse 23 zugewandt ist. Die beiden Schraubenfedern haben die gleiche Steigung. Diese beträgt mindestens das Zweifache und zweckmässigerweise mindestens das Dreifache, beispielsweise etwa das Drei- bis Fünfzehnfache der in einem durch die Drehachse 23 verlaufenden Schritt parallel zur Drehachse 23 gemessenen Abmessung des die Schraubenfeder bildenden Drahtes.

Der Innendurchmesser der Schraubenfeder 27 ist ungefähr gleich dem Aussendurchmesser des kurzen, zylindrischen Dorn-Abschnittes 25a. Das eine Ende der Schraubenfeder 27 liegt satt auf der Mantelfläche des Dorn-Abschnittes 25a auf und ist dort drehfest und axial unverschiebbar am Dorn 25 befestigt, beispielsweise angeschweisst. Das andere, in der Förderrichtung gesehen hintere Ende der Schraubenfeder 27 ist unbefestigt und kann sich also bezüglich des Dorns bewegen. Die Schraubenfeder 27 erstreckt sich ungefähr über die ganze Länge des sich im Förder-Kanal 3 befindenden Teils des Dorns 25, nämlich bis zu dem Dorn-Abschnitt 25a zugewandten Ende des Dorn-Abschnittes 25e. Jeder Dorn 25 bildet zusammen mit der an ihm befestigten Schraubenfeder 27 gewissermassen eine Förderschnecke.

Zwischen der Innenfläche der Schraubenfeder 27 und den Abschnitten 25b, 25c, 25d des zugehörigen Dorns 25 ist ein Zwischenraum vorhanden. Die Schraubenfeder kann beispielsweise einen Innendurchmesser von 15 mm und einen Aussendurchmesser von 19 mm aufweisen. Der Aussendurchmesser des Dorn-Abschnittes 25b ist mindestens 0,5 mm und beispielsweise 1 mm kleiner als der Innendurchmesser der Schraubenfeder 27. Der Aussendurchmesser des Dorn-Abschnittes 25d ist dann beispielsweise 4 bis 6 mm kleiner als der Innendurchmesser der Schraubenfeder 27. Zwischen dem wesentlichen Teil jeder Schraubenfeder 27, d.h. dem nicht befestigten, sich über mindestens etwa 90% der gesamten Länge der Schraubenfeder erstreckenden Teil, und dem zugehörigen Dorn 25 ist also Spiel vorhanden. Dies ermöglicht, dass die Schraubenfeder in der Richtung der im allgemeinen mit ihrer Längsachse zusammenfallenden Drehachse 23 zusammengedrückt und gedehnt werden kann und dass sie auch quer zur Drehachse 23 innerhalb des gegebenen Spiels deformiert werden kann.

Der Abstand der beiden je einen Dorn 25 tragenden Wellen 21 ist geringfügig grösser als der grösste Aussendurchmesser der Dorne 25 und kleiner als der Aussendurchmesser der Schraubenfedern 27. Die beiden Schraubenfedern 27 durchdringen einander daher in der Mitte zwischen den beiden Drehachsen 23. Die beiden Schraubenfedern sind dabei derart auf den Dornen befestigt, dass bei entspannten, undeformierten Schraubenfedern jeweils eine Windung der einen Schraubenfeder ungefähr in der Mitte zwischen zwei benachbarten Windungen der andern Schraubenfeder hindurchverläuft.

Der Anfangs-Abschnitt 5 des Förder-Kanals 3 ist derart ausgebildet, dass der kleinste Zwischenraum zwischen seinem Boden und den undeformierten Schraubenfedern 27 mindestens 0,25 mm beträgt. Die im Querschnitt kreisbogenförmigen Teile des Anfangs-Abschnittes 5 sind koaxial zur jeweils näheren Drehachse 23 und derart bemessen, dass zwischen ihnen und den kreiszylindrischen Hüllflächen der undeformierten Schraubenfedern 27 ein Zwischenraum von mindestens 0,25 mm frei bleibt. Der End-Abschnitt 13 des Förder-Kanals ist so ausgebildet, dass seine beiden, im Querschnitt kreisbogenförmigen Innenflächen-Abschnitte koaxial zu je einer der beiden Drehachsen 23 sind und dass zwischen den Hüllflächen der undeformierten Schraubenfedern 27 und der Innenfläche des End-Abschnittes 13 ein Zwischenraum von mindestens 0,25 mm frei bleibt. Die zum Förder-Kanal gehörenden Öffnungen der Flansche 9 und 11 sind ebenfalls mindestens ungefähr in dieser Weise ausgebildet, wobei noch eine Übergangsfläche vorhanden sein kann, die einen einigermassen stetigen Übergang von der Innenfläche des Anfangs-Abschnittes 5 zur Innenfläche des End-Abschnittes 13 ergibt.

Am Support 1 ist ein elektrischer Motor 31 und ein in einem Gehäuse untergebrachten Getriebe 33 befestigt. Der Motor 31 treibt im Betrieb über das Getriebe 33 die beiden Wellen 21 und damit auch die beiden Dorne 25 und zugehörigen Schraubenfedern 27 mit gleicher Drehzahl im gleichen Drehsinn an. Im vorliegenden Fall werden die Schraubenfedern in der Richtung der Drehpfeile 35, d.h. bei Blickrichtung auf den Auslass des Förder-Kanals im Gegenuhrzeigersinn gedreht.

Im Einlauf 15 ist noch ein Rührorgan 37 um eine horizontale, parallel zu den Drehachsen 23 verlaufende Drehachse drehbar gelagert. Das Rührorgan 37 weist mindestens zwei, etwa vier Arme mit beispielsweise abgewinkelten Enden auf. Das Rührorgan 37 ist ebenfalls über das Getriebe 33 mit dem Motor 31 verbunden, so dass es beim Betrieb der Vorrichtung gedreht wird. Die Länge der Arme ist derart bemessen, dass sich ihre abgewinkelten Enden beim Betrieb in einem kleinen Abstand über die Hüllflächen der Schraubenfedern 27 wegbewegen.

Die beim Betrieb mit dem Schüttgut in Berührung kommenden Teile, also insbesondere der Förder-Kanal 3, der Einlauf 15, die Dorne 23, die Schraubenfedern 25 und das Rührorgan 37 bestehen aus korrosionsfesten Materialien, beispielsweise rostfreien Stählen.

Wenn die Vorrichtungen zum Fördern und Dosieren eines teilchenförmigen, beispielsweise pulver- oder griessförmigen Schüttgutes verwendet wird, bringt man eine gewisse Menge davon in den Einlauf. Wenn die Dorne 25 mit den Schraubenfedern 27 und das Rührorgan 37 gedreht werden, gelangt Schüttgut in den Anfangs-Abschnitt 5 des Förder-Kanals 3 und wird dann durch die Schraubenfedern in der Figur 2 nach links gefördert. Das Schüttgut gelangt dabei in den die beiden Schraubenfedern im Querschnitt allseitig umschliessenden End-Abschnitt 13 des Förder-Kanals 3 und tritt schliesslich bei dem vom freien Ende des End-Abschnittes 13 gebildeten Auslass aus dem Förder-Kanal 3 aus. Das pro Zeiteinheit geförderte Schüttgut-Volumen ist dabei durch die Ausbildung des End-Abschnittes 13 des Förder-Kanals 3, der Dorne 25 und der Schraubenfedern 27 sowie durch die Drehzahl der letzteren festgelegt. Auf diese Weise kann das Schüttgut für die weitere Verwendung dosiert werden, wobei die Drehzahl des Motors 31 zweckmässigerweise im Betrieb kontinuierlich, d.h. stufenlos einstell- und regelbar ist.

Gewisse Schüttgüter neigen dazu, an Abschnitten der Innenflächen des Förder-Kanals 3 oder der Dorne 25 oder der Schraubenfedern 27 anzuhaften. Da sich die beiden Schraubenfedern 27 zwischen den beiden Drehachsen 23 gegenseitig teilweise durchdringen und sich bei der Durchdringungsstelle in entgegengesetzte Richtungen bewegen, wirken sie einem Anhaften des Schüttgutes entgegen. Wenn nun aber doch von Zeit zu Zeit Klumpen entstehen und relativ gross werden sollten, so deformieren diese Klumpen, mindestens wenn sie eine gewisse Grösse erreicht haben, mindestens eine der beiden Schraubenfedern. Die Schraubenfedern können sich dann stellenweise einander oder den Dornen oder der Innenfläche des Förder-Kanals annähern, wobei es auch zu Berührungen kommen kann. Bei der Deformation entsteht in den Schraubenfedern eine der Deformation entgegenwirkende Gegenkraft. Diese wird jeweils nach kurzer Zeit so gross, dass die Schraubenfedern ruckartig ihre undeformierte Form annehmen und die Schüttgut-Klumpen lösen und zerteilen.

Durch das Ineinandereingreifen und die Deformationen der Schraubenfedern wird also gewährleistet, dass allfällig gebildete Schüttgut-Klumpen immer wieder gelöst und verkleinert werden, so dass es auch bei besonders stark zum Anhaften und zur Klumpenbildung neigenden Schüttgütern praktisch nie zu einer völligen Verstopfung des Förder-Kanals und einer Blockierung der Schraubenfedern kommen kann.

Die Dorne 25 erlauben also eine gewisse Deformation der Schraubenfedern 27, stützen und führen diese aber doch mit einem gewissen Spiel und begrenzen insbesondere quer zu den Drehachsen 23 gerichtete Deformationen. Dadurch wird verhindert, dass sich die Schraubenfedern 27 übermässig in den Einlauf 15 hinaufbiegen. Es kann daher auch gewährleistet werden, dass die Schraubenfedern 27 nie in Berührung mit dem Rührorgan 37 kommen.

Die Dorn-Abschnitte 25c, bei denen der Aussendurchmesser der Dorne in der Förderrichtung gesehen nahezu sprungartig abnimmt, befinden sich ungefähr beim Anfang oder kurz hinter dem Anfang des im Querschnitt allseitig geschlossenen Abschnittes des Förder-Kanals 3. Das Schüttgut wird daher vor allem beim Eintritt in den im Querschnitt allseitig geschlossenen Abschnitt des Förder-Kanals dosiert, d.h. volumetrisch abgemessen und hat beim Weitertransport dann wieder mehr Raum zur Verfügung. Das Schüttgut kann sich also im Laufe der Weiterförderung wieder lockern und ausdehnen, was einer Verstopfung des Förder-Kanals ebenfalls entgegenwirkt.

Die Abschnitte 25e der Dorne 25 ermöglichen, die Dorne mit einem Schlüssel zu fassen und mitsamt den an ihnen befestigten Federn 27 zu drehen. Dies ist beispielsweise nützlich, wenn die Dorne und Federn ausgebaut, d.h. von den Wellen 21 getrennt werden sollen.

In der Figur 5 sind ein bezüglich einer Drehachse 123 im wesentlichen rotationssymmetrischer und um diese drehbar gelagerter Dorn 125 sowie eine Schraubenfeder 127 dargestellt. Diese sind im allgemeinen ähnlich ausgebildet und angeordnet wie die Dorne 25 bzw. Schraubenfedern 27 und dienen dazu, ein Schüttgut von rechts nach links durch einen Förder-Kanal zu fördern. Die Schraubenfeder 127 unterscheidet sich jedoch von der Schraubenfeder 27 dadurch, dass die Aussenfläche des sie bildenden Drahtes nicht parallel zur Drehachse verläuft, sondern gegen die letztere geneigt ist. Die Aussenfläche und diejenige Stirnfläche der Schraubenfeder-Windungen, die das Schüttgut in die Förderrichtung drückt, bilden daher gewissenmassen eine Schneide. Diese ist besonders wirkungsvoll, um an der Innenfläche des Förder-Kanals anhaftendes Schüttgut zu lösen.

Die Abmessungen, Ausbildungen und Anordnungen der Dorne und Schraubenfedern können selbstverständlich zur Anpassung an die vorgesehenen Förderleistungsbereiche und Eigenschaften von verschiedenen Schüttgütern variiert werden. Die lösbare Befestigung der Dorne an den sie antreibenden Wellen ermöglicht insbesondere auch, unterschiedlich ausgebildete Dorne und Schraubenfedern bereitzustellen und nach Bedarf auszuwechseln.

Der Hauptteil der Dorne 25 wird durch die beiden unterschiedlichen Durchmesser aufweisenden, kreiszylindrischen Abschnitte 25b und 25d gebildet. Anstelle von in der Förderrichtung stufenartig dünner werdender Dorne könnte man auch Dorne vorsehen, bei denen ein sich über eine relativ lange Strecke leicht konisch verjüngender Abschnitt vorhanden ist. Die Dorne könnten aber eventuell auch über den Hauptteil ihrer Länge konstante Profilformen und -abmessungen aufweisen. Des weitern könnte jeder der beiden Dorne mit mindestens einer schraubenlinienartig verlaufenden Rippe oder Rille versehen sein. Ferner könnten die Dorne statt einer rotationssymmetrischen auch eine andere, beispielsweise drei- oder viereckige Querschnittsform aufweisen. Dabei könnten die eine drei- oder viereckige Querschnittsform aufweisenden Dorne über den wesentlichen Teil ihrer Länge konstante Profilformen und -abmessungen aufweisen oder mit mindestens zwei verschieden dicken Abschnitten versehen sein, oder sich über eine längere Strecke stetig verjüngen.

Im weiteren wäre es möglich, die Dorne unverdrehbar, aber lösbar im Support zu befestigen und nur die Schraubenfedern drehfest mit den Antriebswellen zu verbinden.

Des weitern müssen sich die Dorne auch nicht unbedingt über die ganze Länge des Förder-Kanals erstrecken. Damit sie verhindern, dass sich die Schraubenfedern in den Einlauf hinaufbiegen, sollten sich die Dorne jedoch mindestens durch den oben offenen, mit dem Einlauf verbundenen Anfangs-Abschnitt des Förder-Kanals hindurch bis in den Anfang des im Querschnitt allseitig geschlossenen Teils des Förder-Kanals hinein erstrecken.

Die in den Figuren 1 bis 4 dargestellte Vorrichtung ist insbesondere zum Fördern und Dosieren von griess- und pulverförmigen Schüttgütern d.h. relativ feinkörnigen Schüttgütern geeignet. Zum Fördern und Dosieren von Schüttgütern mit grösseren Körnern und/oder relativ stark von der Kugelform abweichenden Teilchen, wie etwa Granulaten und Agglomeraten, können die die Schraubenfedern durchdringenden Dorn-Abschnitte, abgesehen vom Abschnitt bei der Befestigungsstelle der Schraubenfedern ohne weiteres überall den gleichen Durchmesser aufweisen. Ferner können dann die Durchmesser der Dorne und Schraubenfedern verkleinert werden.

**Patentansprüche**

1. Vorrichtung zum Fördern, und insbesondere Dosieren, eines Schüttgutes, mit einem Support (1), einem an diesem befestigten, mindestens annähernd horizontal verlaufenden Förder-Kanal (3), der einen im Querschnitt auf seiner oberen Seite offenen Anfangs-Abschnitt (5) und einen in der Förderrichtung nachfolgenden, im Querschnitt allseitig geschlossenen Abschnitt (13) aufweist, einem in den oben offenen Anfangs-Abschnitt (5) des Förder-Kanals (3) mündenden Einlauf (15) für das Schüttgut und zwei Schraubenfedern (27), die je einen sich im Anfangs-Abschnitt (5) des Förder-Kanals (3) befindenden Teil aufweisen und die durch Antriebsmittel und zueinander parallele, nebeneinander in der Längsrichtung des Förder-Kanals (3) verlaufende Drehachsen (23) drehbar sind, wobei die Längsachsen der sich in undeformiertem Zustand befindenden Schraubenfedern (27) mit den zugehörigen Drehachsen (23) fluchten und wobei die eine dieser Schraubenfedern (27) in den im Querschnitt allseitig geschlossenen Abschnitt (13) des Förder-Kanals (3) hineinragt, dadurch gekennzeichnet, dass auch die andere Schraubenfeder (27) in den im Querschnitt allseitig geschlossenen Abschnitt (13) des Förder-Kanals (3) hineinragt und dass die Windungen der beiden Schraubenfedern (27) einander gegenseitig teilweise durchdringen.

2. Vorrichtung nach Anspruch 1, dadurch gekennzeichnet, dass die beiden Schraubenfedern (27) die gleiche Steigung aufweisen.

3. Vorrichtung nach Anspruch 1 oder 2, dadurch gekennzeichnet, dass die beiden Schraubenfedern (27) den gleichen Wicklungssinn aufweisen und dann die Antriebsmittel derart ausgebildet sind, dass sie die beiden Schraubenfedern (27) beim Betrieb im gleichen Drehsinn drehen.

4. Vorrichtung nach einem der Ansprüche 1 bis 3, dadurch gekennzeichnet, dass für jede der beiden Schraubenfedern (27) ein formsteifer Dorn (25) im Support (1) gehalten ist, der entlang der zur betreffenden Schraubenfeder (27) gehörigen Drehachse (23) mindestens durch einen Teil der Schraubenfeder (27) hindurch verläuft, der sich im oben offenen Anfangs-Abschnitt (5) des Förder-Kanals (3) befindet, Deformationen der Schraubenfeder (27) in Richtung der Drehachse (23) erlaubt und quer zur letzteren gerichtete Deformationen begrenzt.

5. Vorrichtung nach Anspruch 4, dadurch gekennzeichnet, dass die beiden Dorne (25) drehbar im Support (1) gelagert und drehfest mit den Schraubenfedern (27) verbunden sind.

6. Vorrichtung nach Anspruch 5, dadurch gekennzeichnet, dass die Schraubenfedern (27) ausschliesslich im Bereich ihres einen Endes mit dem Dorn (25) verbunden sind und in ihrem restlichen Teil frei federn können.

7. Vorrichtung nach einem der Ansprüche 5 oder 6, dadurch gekennzeichnet, dass jeder Dorn (25) auch durch einen Teil der Schraubenfedern (27) hindurch verläuft, der sich in dem im Querschnitt allseitig geschlossenen Abschnitt (13) des Förder-Kanals (3) befindet.

8. Vorrichtung nach einem der Ansprüche 4 bis 7, dadurch gekennzeichnet, dass der Durchmesser des die Schraubenfedern (27) durchdringenden Teils der Dorne (25) in der Förderrichtung gesehen abnimmt.

9. Vorrichtung nach Anspruch 8, dadurch gekennzeichnet, dass der Dorn (25) einen dickeren und einen dünneren Abschnitt (25b, 25d) aufweist und dass sich der dickere Dorn-Abschnitt (25b) mindestens durch einen Teil des oben offenen Anfangs-Abschnittes (5) und der dünnere Dorn-Abschnitt (25d) mindestens durch einen Teil des im Querschnitt allseitig geschlossenen End-Abschnittes (13) des Förder-Kanals (3) hindurch erstreckt.

10. Vorrichtung nach einem der Ansprüche 1 bis 9, dadurch gekennzeichnet, dass mindestens ein Längs-Abschnitt des im Querschnitt allseitig geschlossenen Abschnittes (13) des Förder-Kanals (3) zwei im Querschnitt kreisbogenförmige Innenfläche-Abschnitte aufweist, die je koaxial zu einer der Drehachsen (23) sind und je einen Schraubenfeder-Längsabschnitt im wesentlichen bis zu denjenigen Umfangsstellen umschliessen, bei denen die Schraubenfedern (27) einander durchdringen.

## Claims

1. Apparatus, for the conveying and – in particular – metering of a loose material, with a support (1), a conveying channel (3), which is attached to this, at least approximately extends horizontally and which displays an initial portion (5) open in cross-section at its upper side and a portion (13) following in the conveying direction and being closed in cross-section at all sides, an inlet (15) for the loose material opening into the upwardly open initial portion (5) of the conveying channel (3) and with two helical springs (27), which each display a part disposed in the initial portion (5) of the conveying channel (3) and which are rotatable by drive means around rotational axes (23), which extend parallelly each to the other and each beside the other in longitudinal direction of the conveying channel (3), wherein the longitudinal axes of the helical springs (27) disposed in undeformed state are in alignment with the associated rotational axes (23) and wherein the one of these helical springs (27) projects into that portion (13) of the conveying channel (3), which is closed in cross-section at all sides, characterised thereby, that also the other helical spring (27) projects into that portion (13) of the conveying channel (3), which is closed in cross-section at all sides and that the turns of both the springs (27) partly interpenetrate each other.

2. Apparatus according to claim 1, characterised thereby, that both the helical springs (27) display the same pitch.

3. Apparatus according to claim 1 or 2, characterised thereby, that both the helical springs (27) display the same sense of winding and the drive means are then constructed in such a manner that, in operation, they rotate both the helical springs (27) in like sense of rotation.

4. Apparatus according to one of the claims 1 to 3, characterised thereby, that mounted in the support (1) for each of both the helical springs (27) is a respective rigid mandrel (25), which extends along the rotational axis (23) belonging to the helical spring (27) concerned through at least a part of the helical spring (27) which is disposed in the upwardly open initial portion (5) of the conveying channel (3), and which permits deformations of the helical springs (27) in the direction of the rotational axis (23) and limits deformations directed transversely to the latter.

5. Apparatus according to calim 4, characterised thereby, that both the mandrels (25) are rotatable borne in the support (1) and connected secure against relative rotation with the helical springs (27).

6. Apparatus according to claim 5, characterised thereby, that the helical springs (27) are connected exclusively in the region of their one end with the mandrel (25) and can be freely resilient in their remaining part.

7. Apparatus according to one of the claims 5 or 6, characterised thereby, that each mandrel (25) also extends through a part of the helical springs (27), which is disposed in that portion (13)

of the conveying channel (3), which is closed in cross-section at all sides.

8. Apparatus according to one of the claims 4 to 7, characterised thereby, that the diameter of that part of the mandrels (25), which penetrates through the helical springs (27), decreases in the conveying direction.

9. Apparatus according to claim 8, characterised thereby, that the mandrel (25) displays a thicker and a thinner portion (25b, 25d) and that the thicker mandrel portion (25b) extends through at least a part the upwardly open initial portion (5) of the conveying channel (3) and the thinner mandrel portion (25d) extends through at least a part of that portion (13) of the conveying channel (3), which is closed in cross-section at all sides.

10. Apparatus according to one of the claims 1 to 9, characterised thereby, that at least a longitudinal portion of that portion (13) of the conveying channel (3), which is closed in cross-section at all sides, displays two internal surface portions which are circularly arcuate in cross-section, are each co-axial with one of the rotational axes (23) and each enclose a longitudinal portion ot the helical springs substantially as far as those points on the circumference, at which the helical springs (27) interpenetrate each other.

**Revendications**

1. Dispositif pour distribuer et en particulier pour doser une matière en vrac, muni d'un support (1), d'un canal de distribution (3) fixé à celui-ci et disposé au moins à peu près horizontalement, ce canal de distribution comportant une zone initiale (5) qui est ouverte vers le haut en section transversale et une zone (13) qui succède à la précédente dans le sens de la distribution et qui est fermée de tous côtés en section transversale, d'une entrée (15) pour la matière en vrac qui débouche dans la zone initiale (5), ouverte vers le haut, du canal de distribution (3), et de deux ressorts hélicoïdaux (27) qui présentent chacun une partie située dans la zone initiale (5) du canal de distribution (3) et qui sont agencés pour pouvoir être entraînés en rotation par des moyens d'entraînement autour d'axes de rotation (23) parallèles l'un à l'autre et disposés l'un à coté de l'autre selon la direction longitudinale du canal de distribution (3), dispositif dans lequel les axes longitudinaux des ressorts hélicoïdaux (27), se trouvant à l'état non déformé, sont alignés avec les axes de rotation correspondants (23) et dans lequel l'un de ces ressorts hélicoïdaux (27) pénètre dans la zone (13), fermée de tous côtés en section transversale, du canal de distribution (3), caractérisé en ce que l'autre ressort hélicoïdal (27) pénètre lui aussi dans la zone (13), fermée de tous côtés en section transversale, du canal de distribution (3) et en ce que les spires des deux ressorts hélicoïdaux (27) s'interpénètrent partiellement.

2. Dispositif selon la revendication 1, caractérisé en ce que les deux ressorts hélicoïdaux (27) ont le même pas.

3. Dispositif selon l'une des revendications 1 et 2, caractérisé en ce que les deux ressorts hélicoïdaux (27) ont le même sens d'enroulement et en ce que les moyens d'entraînement sont agencés de façon à faire tourner, en fonctionnement, les deux ressorts hélicoïdaux (27) dans le même sens.

4. Dispositif selon l'une des revendications 1 à 3, caractérisé en ce que, pour chacun des deux ressorts hélicoïdaux (27), le support (1) porte une tige rigide (25) qui est disposée le long de l'axe de rotation (23) associé au ressort hélicoïdal (27) considéré en étant engagée dans au moins une partie du ressort hélicoïdal (27) qui se trouve dans la zone initiale (5), ouverte vers le haut, du canal de distribution (3) et qui permet aux ressorts hélicoïdaux (27) de se déformer dans la direction de l'axe de rotation (23) en limitant leurs déformations orientées transversalement par rapport à cette dernière direction.

5. Dispositif selon la revendication 4, caractérisé en ce que les deux tiges (25) sont montées de façon à pouvoir tourner sur le support (1) et sont solidarisées en rotation avec les ressorts hélicoïdaux (25).

6. Dispositif selon la revendication 5, caractérisé en ce que les deux ressorts hélicoïdaux (27) sont reliés à leur tige (25) exclusivement dans la zone de l'une de leurs extrémités et peuvent librement se déformer élastiquement sur leur partie restante.

7. Dispositif selon l'une des revendications 5 et 6, caractérisé en ce que chaque tige (25) est engagée aussi dans une partie des ressorts hélicoïdaux (27) qui est située dans la zone (13), fermée de tous côtés en section transversale, du canal de distribution (3).

8. Dispositif selon l'une quelconque des revendications 4 à 7, caractérisé en ce que le diamètre de celle des parties des tiges (25) qui est engagée dans les ressorts hélicoïdaux (27) décroît dans le sens de la distribution.

9. Dispositif selon la revendication 8, caractérisé en ce que la tige (25) comprend un tronçon relativement épais (25b) et un tronçon relativement mince (25d) et en ce que le tronçon de tige relativement épais (25b) s'étend au moins dans une partie de la zone initiale (5), ouverte vers le haut, du canal de distribution (3) tandis que le tronçon de tige relativement mince (25b) s'étend au moins dans une partie de la zone finale (13), fermée de tous côtés en section transversale, de ce canal.

10. Dispositif selon l'une des revendications 1 à 9, caractérisé en ce qu'au moins une fraction longitudinale de la zone (13), fermée de tous côtés en section transversale, du canal de distribution (3) comporte deux parties de surface intérieure dont la section transversale a une forme en arc de cercle, lesquelles parties sont coaxiales chacune à l'un des axes de rotation (23) et entourent chacune une fraction longitudinale de ressort hélicoïdal, esessentiellement jusqu'aux endroits dela périphérie dans lesquels les ressorts hélicoïdaux (27) s'interpénètrent.

Fig. 1

Fig. 2

# Fig. 3

# Fig. 5

# Fig. 4